# EUROPEAN PATENT APPLICATION

(11) **EP 4 502 013 A1**
(43) Date of publication of application: **05.02.2025**
(21) Application number: 23775008.8
(22) Date of filing: 23.03.2023
(51) Int. Cl.: C08G 75/045, C08K 3/01, C08K 5/14, C08L 83/07, C08L 83/08, C09K 5/14

(54) **PASTE**

(30) Priority: 25.03.2022 JP 2022050328
(71) Applicant: VALQUA, Ltd., Shinagawa-ku Tokyo 141-6024 (JP)
(72) Inventor: YOSHIYAMA, Tomoaki, Machida-shi, Tokyo 194-0215 (JP); NISHI, Ryosuke, Gojo-shi, Nara 637-0014 (JP); CHENG, Fei, Tokyo 141-6024 (JP)
(74) Representative: Dehns
(86) International application number: PCT/JP2023/011447
(87) International publication number: WO 2023/182414

(57) **Abstract**

A paste contains: a polysiloxane (A) having a mercapto group; a compound (B) containing two or more groups having an ethylenically unsaturated bond in one molecule; and a radical initiator (C).

## Description

### Technical Field

One embodiment of the present invention relates to a paste.

### Background Art

In members such as sliding members, brake members, and vibration suppression/absorption members, a paste (also referred to as grease) is used between the respective members in order to ensure a predetermined movement, wear resistance, and seizure resistance of these members, for example.

A heat radiating (thermally conductive) material is used between a heating element and a heat radiating part in an electronic component, for example, in order to efficiently transfer heat from the heating element to the heat radiating part. As the heat radiating material, there are mainly two forms of a sheet type and a paste type, but the sheet type has a large thermal contact resistance due to factors such as poor conformability with the mating surface of the heating element, the heat radiating part, for example, and the sheet itself requiring a certain thickness. For this reason, a paste type is used as the heat radiating material due to factors such as the paste type capable of being thinned at the time of coating, favorable conformability with the mating surface, and excellent heat dissipation performance.

When the viscosity of the paste during coating is low, since workability such as coatability and productivity of the paste are improved, and a predetermined amount, particularly, a small amount of the paste is easily placed in a predetermined location, for example, in the case of the heat radiating material, the thickness of a paste layer can be reduced, and the heat dissipation performance can be improved, so that the viscosity of the paste during coating is reduced to be low.

Meanwhile, the paste is also required to remain in a predetermined location in order to achieve the purpose required for the paste.

As such a paste, for example, a silicone paste using a silicone compound as a base oil is known (Patent Literatures 1 and 2).

### Citation List

### Patent Literatures

Patent Literature 1: JP 2013-227374 A
Patent Literature 2: JP 2017-165791 A

### Summary of Invention

However, the viscosity of conventional pastes decreases as the temperature increases, the paste easily flows out of the predetermined location (hereinafter, also referred to as "pump-out"). Due to this pump-out, or deterioration or solidification of the conventional paste itself at a high temperature, so that the purpose required for the paste cannot be achieved.

The paste formed at a predetermined location may be once heat thickened for use in order to suppress outflow from the location.

However, a paste having a low viscosity during coating is likely to pump out even after being heat thickened in this way, and has a problem in that, for example, it is difficult to maintain predetermined performance for a long period of time.

One embodiment of the present invention provides a paste which does not solidify even after being heat thickened and in which pump-out can be suppressed even when heat thickening is performed at a relatively low heating temperature despite a low initial viscosity.

The initial viscosity described here is a viscosity at the time the paste is prepared, a viscosity before the paste is heat thickened, and is usually a viscosity during coating.

### Solution to Problem

An exemplary configuration of the present invention is as follows.
[1] A paste containing: a polysiloxane (A) having a mercapto group; a compound (B) containing two or more groups having an ethylenically unsaturated bond in one molecule; and a radical initiator (C).
[2] The paste according to [1], wherein a functional group ratio represented by the following Formula (1) is 3 or less: Functional group ratio = (a blending amount of the polysiloxane (A)/a functional group equivalent of thepolysiloxane (A)(a blending amount of the compound (B)/a functional group equivalent of the compound (B))
[3] The paste according to [1] or [2], which satisfies the following requirement (I).
   Requirement (I): A thickness is 200 um or less when heat curing is performed at a 1-minute half-life temperature of the radical initiator (C) for 10 minutes to form 0.2 g of the paste after the heat curing into a 5 mm square, and then the paste is compressed at 23°C and a pressure of 1.0 MPa.
[4] The paste according to any one of [1] to [3], wherein an initial shear viscosity at 23°C is 500 Pa·s or less.
[5] The paste according to any one of [1] to [4], wherein a ratio of a shear viscosity after heating of the paste after the paste is heated at a 1-minute half-life temperature of the radical initiator (C) for 10 minutes and then cooled to 23°C to the initial shear viscosity at 23°C is 3 times or more.
[6] The paste according to any one of [1] to [5], comprising a thermally conductive filler (D).
[7] The paste according to [6], wherein a content of the thermally conductive filler (D) is 30 to 80 vol% with respect to 100 vol% of the paste.

### Advantageous Effects of Invention

According to one embodiment of the present invention, it is possible to provide a paste which does not solidify (does not solidify and remains in a paste form) even after being heat thickened and in which pump-out can be suppressed even when heat thickening is performed at a relatively low heating temperature (for example: a 1-minute half-life temperature of a radical initiator) despite a low initial viscosity.

According to one embodiment of the present invention, it is also possible to provide a paste having heat resistance (for example: heat resistance at 150°C or higher), and for example, to provide a paste having almost no (extremely long) pot life in a storage environment at normal temperature.

Such a paste according to one embodiment of the present invention does not solidify and remains in a paste form at a high temperature, and thus can maintain the performance required for a member using the paste for a long period of time even at a high temperature.

The paste according to one embodiment of the present invention is defined as a paste having a thickness of 200 um or less when 0.2 g of the paste is formed into a 5 mm square and then compressed at 23°C and a pressure of 1.0 MPa.

Since the paste according to one embodiment of the present invention is a paste which does not solidify even after being heat thickened, it is preferable that the paste has a thickness of 200 um or less when heat curing is performed at a 1-minute half-life temperature of the radical initiator (C) for 10 minutes to form 0.2 g of the paste after the heat curing into a 5 mm square, and then the paste is compressed at 23°C and a pressure of 1.0 MPa.

The method for measuring the thickness is specifically as described in the following Examples.

### Description of Embodiments

### <<Paste>>

A paste according to one embodiment of the present invention (hereinafter, also referred to as "present paste") contains a polysiloxane (A) [hereinafter, also referred to as "component (A)"; the same applies to other components] having a mercapto group, a compound (B) containing two or more groups having an ethylenically unsaturated bond in one molecule, and a radical initiator (C).

### <Polysiloxane (A)>

The component (A) is not particularly limited as long as it is a polysiloxane having a mercapto group (-SH).

By using such a component (A), it is possible to easily obtain a paste which is excellent in heat resistance and does not solidify even after being heat thickened and in which pump-out can be suppressed even when heat thickening is performed at a relatively low heating temperature despite a low initial viscosity.

The component (A) used in the present paste may be one kind or two or more kinds.

The bonding position of the mercapto group is not particularly limited, and may be a so-called side-chain type, end type (including single-end type and dual-end type), or side-chain dual-end type, but is preferably a side-chain type or a dual-end type, and more preferably a side-chain type.

The component (A) is an organopolysiloxane in which an organic group is bonded to a silicon atom, and is preferably a polysiloxane having a mercapto group in at least a part of the organopolysiloxane.

Examples of the organic group bonded to the silicon atom include a linear alkyl group, a branched alkyl group, a cyclic alkyl group, an aryl group, an aralkyl group, a halogenated alkyl group, and an alkoxy group.

Examples of the linear alkyl group include groups having 1 to 20 carbon atoms, preferably 1 to 6 carbon atoms, such as a methyl group, an ethyl group, a propyl group, a hexyl group, an octyl group, and a decyl group.

Examples of the branched alkyl group include groups having 1 to 20 carbon atoms, preferably 1 to 6 carbon atoms, such as an isopropyl group, an isobutyl group, a t-butyl group, and a 2-ethylhexyl group.

Examples of the cyclic alkyl group include groups having 3 to 20 carbon atoms such as a cyclopentyl group and a cyclohexyl group.

Examples of the aryl group include groups having 6 to 20 carbon atoms such as a phenyl group and a tolyl group.

Examples of the aralkyl group include groups having 7 to 20 carbon atoms such as a benzyl group, a 2-phenylethyl group, and a 2-methyl-2-phenylethyl group.

Examples of the halogenated alkyl group include groups having 1 to 20 carbon atoms, preferably 1 to 6 carbon atoms, such as a 3,3,3-trifluoropropyl group, a 2-(nonafluorobutyl)ethyl group, and a 2-(heptadecafluorooctyl)ethyl group.

Examples of the alkoxy group include groups having 1 to 20 carbon atoms, preferably 1 to 6 carbon atoms, such as a methoxy group and an ethoxy group.

As the organic group bonded to the silicon atom, a linear alkyl group and an aryl group are preferable, a linear alkyl group having 1 to 6 carbon atoms and an aryl group are more preferable, and a methyl group and a phenyl group are particularly preferable.

That is, as the structure other than the portion having a mercapto group in the organopolysiloxane, at least one polysiloxane structure selected from dimethylpolysiloxane, methylphenylpolysiloxane, and diphenylpolysiloxane is preferable, and dimethylpolysiloxane structure is more preferable.

The mercapto group may be directly bonded to a silicon atom, or may be bonded to a silicon atom via an organic group bonded to the silicon atom.

The molecular structure of the component (A) is not particularly limited, and examples thereof include linear, branched, and partially branched linear and dendritic (dendrimer-like) and linear or partially branched linear is preferred. The component (A) may be a single polymer having such a molecular structure, a copolymer having such a molecular structure, or a mixture of two or more of these polymers.

Specific examples of the component (A) include a polysiloxane represented by the following Formula (2). 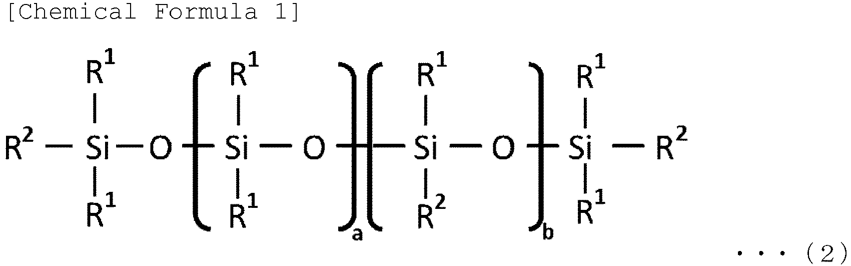 [In Formula (2), R¹ and R² are each independently an unsubstituted or substituted monovalent hydrocarbon group, a mercapto group, an alkoxy group, or an alkylmercapto group having 1 to 6 carbon atoms, and the sum of a and b is an integer of 2 to 500, provided that, at least one of R¹ and R² in Formula (2) includes a mercapto group or an alkylmercapto group having 1 to 6 carbon atoms, a plurality of R¹'s present in Formula (2) may be the same as or different from each other, and a plurality of R²'s present in Formula (2) may be the same as or different from each other.]

The unsubstituted or substituted monovalent hydrocarbon group in R¹ and R² is preferably an unsubstituted or substituted monovalent hydrocarbon group having 1 to 20 carbon atoms, and examples thereof include groups similar to the groups (other than an alkoxy group) exemplified as the organic group bonded to the silicon atom. Among them, a monovalent hydrocarbon group having 1 to 6 carbon atoms is preferable, and an alkyl group having 1 to 6 carbon atoms and an aryl group are more preferable.

Examples of the alkoxy group in R¹ and R² include groups similar to the alkoxy group exemplified as the organic group bonded to the silicon atom.

The alkylmercapto group having 1 to 6 carbon atoms in R¹ and R² is a group represented by -R-SH (R is an alkylene group having 1 to 6 carbon atoms), and examples of the R include groups obtained by removing one hydrogen atom from the groups exemplified as the organic group bonded to the silicon atom (groups other than a halogenated alkyl group and an alkoxy group).

As the component (A), one synthesized by a conventionally known method may be used, or a commercially available product may be used.

A shear viscosity at 23°C of the component (A) measured with a cone-plate type viscometer is preferably 0.005 Pa·s or more and more preferably 0.01 Pa·s or more, and is preferably 60.00 Pa·s or less and more preferably 5.00 Pa·s or less.

When the viscosity of the component (A) is in the above range, a paste having a low initial viscosity and excellent coatability can be easily obtained. When such a paste having a low initial viscosity is a heat dissipation paste, for example, since a paste layer having a small thickness can be easily formed at a predetermined location such as between a heating element and a heat radiating part, and a paste layer that easily conforms to the mating surface of a heating element, a heat radiating part, for example, can be easily formed, heat resistance resulting from the paste layer can be reduced, and, for example, an electronic component having excellent heat dissipation characteristics can be easily obtained.

A functional group (mercapto group) equivalent of the component (A) is preferably 1000 g/mol or more and more preferably 1500 g/mol or more, and is preferably 50000 g/mol or less and more preferably 35000 g/mol or less, from the viewpoint that, for example, a paste which has a viscosity enough to suppress pump-out after being heat thickened but does not solidify even after being heat thickened and continuously remains in a paste form can be easily obtained.

As the component (A), it is desirable to use a polysiloxane (A1) having a functional group equivalent of preferably 1000 to 5000 g/mol and more preferably 1500 to 5000 g/mol and a polysiloxane (A2) having a functional group equivalent of preferably 15000 g/mol or more and more preferably 20000 g/mol or more, and is preferably 50000 g/mol or less and more preferably 35000 g/mol or less, from the viewpoint that, for example, a paste which has a viscosity enough to suppress pump-out after being heat thickened but does not solidify even after being heat thickened and continuously remains in a paste form can be easily obtained.

In the case of using such polysiloxanes (A1) and (A2), a ratio of the polysiloxane (A2) to 100 mass% of the total of these polysiloxanes is preferably 50.0 mass% or more and more preferably 75.0 mass% or more, and is preferably 99.5 mass% or less and more preferably 99.0 mass% or less.

A number average molecular weight (Mn) of the component (A) measured by gel permeation chromatography (GPC) is preferably 3000 or more and more preferably 15000 or more, and is preferably 50000 or less and more preferably 25000 or less, from the viewpoint that, for example, a paste in which pump-out can be suppressed even when heat thickening is performed at a relatively low heating temperature despite a low initial viscosity can be easily obtained.

A content of the component (A) in the present paste is preferably 40.0 mass% or more, more preferably 70.0 mass% or more, and still more preferably 85.0 mass% or more, and is preferably 99.0 mass% or less and more preferably 98.5 mass% or less, with respect to 100 mass% of the total of the components (A) and (B) in the present paste, from the viewpoint that, for example, a paste having an excellent balance of heat resistance, a low initial viscosity, and the suppression property of pump-out can be easily obtained.

When the present paste does not contain the following component (D), the content of the component (A) in the present paste is preferably 40.0 mass% or more and more preferably 60.0 mass% or more, and is preferably 95.0 mass% or less and more preferably 90.0 mass% or less, with respect to 100 mass% of the present paste, from the viewpoint that, for example, a paste having an excellent balance of heat resistance, a low initial viscosity, and the suppression property of pump-out can be easily obtained.

For the same reason, when the present paste contains the following component (D), the content of the component (A) in the present paste is preferably 5.0 mass% or more and more preferably 10.0 mass% or more, and is preferably 30.0 mass% or less and more preferably 20.0 mass% or less, with respect to 100 mass% of the present paste.

### <Compound (B)>

The component (B) is not particularly limited as long as it is a compound containing two or more groups having an ethylenically unsaturated bond in one molecule other than the component (A), and a conventionally known compound (cocrosslinking agent) can be used.

By using the component (B), a paste which is excellent in the suppression property of pump-out after being heat thickened can be easily obtained.

The component (B) used in the present paste may be one kind or two or more kinds.

The number of groups having an ethylenically unsaturated bond in the component (B) may be two, but is preferably three or more and more preferably three to six from the viewpoint that, for example, pump-out can be further suppressed.

Two or more groups having an ethylenically unsaturated bond contained in the component (B) may be the same as or different from each other. That is, the component (B) may contain two or more kinds of groups having an ethylenically unsaturated bond.

Examples of the group having an ethylenically unsaturated bond include alkenyl groups having 2 to 8 carbon atoms such as a vinyl group, a methylvinyl group, an allyl group, a propenyl group, an isopropenyl group, a butenyl group, a pentenyl group, a hexenyl group, and a heptenyl group, a vinylphenyl group, a (meth)acryloyl group, an allyloxy group, a styryl group, a propargyl group, and a maleimide group. Among them, an alkenyl group having 2 to 8 carbon atoms and a (meth)acryloyl group are preferable, an alkenyl group having 2 to 4 carbon atoms and a (meth)acryloyl group are more preferable, and a vinyl group, an allyl group, and a (meth)acryloyl group are particularly preferable.

Examples of the component (B) include a polysiloxane containing two or more groups having an ethylenically unsaturated bond in one molecule;
polyfunctional (meth)acrylate compounds such as ethylene glycol di(meth)acrylate, diethylene glycol di(meth)acrylate, polyethylene glycol di(meth)acrylate, propylene glycol di(meth)acrylate, butylene glycol di(meth)acrylate, hexanediol di(meth)acrylate, cyclohexanedimethanol di(meth)acrylate, bisphenol A alkylene oxide di(meth)acrylate, bisphenol F alkylene oxide di(meth)acrylate, trimethylol propane tri(meth)acrylate, ditrimethylol propane tetra(meth)acrylate, glycerin tri(meth)acrylate, pentaerythritol tri(meth)acrylate, pentaerythritol tetra(meth)acrylate, dipentaerythritol penta(meth)acrylate, dipentaerythritol hexa(meth)acrylate, tripentaerythritol hepta(meth)acrylate, tripentaerythritol octa(meth)acrylate, ethylene oxide adduct trimethylol propane tri(meth)acrylate, ethylene oxide adduct ditrimethylol propane tetra(meth)acrylate, ethylene oxide adduct pentaerythritol tetra(meth)acrylate, ethylene oxide adduct dipentaerythritol hexa(meth)acrylate, propylene oxide adduct trimethylol propane tri(meth)acrylate, propylene oxide adduct ditrimethylol propane tetra(meth)acrylate, propylene oxide adduct pentaerythritol tetra(meth)acrylate, propylene oxide adduct dipentaerythritol hexa(meth)acrylate, ε-caprolactone adduct trimethylol propane tri(meth)acrylate, ε-caprolactone adduct ditrimethylol propane tetra(meth)acrylate, ε-caprolactone adduct pentaerythritol tetra(meth)acrylate, ε-caprolactone adduct dipentaerythritol hexa(meth)acrylate, dipentaerythritol penta(meth)acrylate succinic acid modified product, pentaerythritol tri(meth)acrylate succinic acid modified product, dipentaerythritol penta(meth)acrylate phthalic acid modified product, pentaerythritol tri(meth)acrylate phthalic acid modified product, tri((meth)acryloyloxyethyl)isocyanurate, and alkylene oxide adduct tri((meth)acryloyloxyethyl)isocyanurate;
polyfunctional vinyl ethers such as ethylene glycol divinyl ether, diethylene glycol divinyl ether, polyethylene glycol divinyl ether, propylene glycol divinyl ether, butylene glycol divinyl ether, hexanediol divinyl ether, bisphenol A alkylene oxide divinyl ether, bisphenol F alkylene oxide divinyl ether, trimethylol propane trivinyl ether, ditrimethylol propane tetravinyl ether, glycerin trivinyl ether, pentaerythritol tetravinyl ether, dipentaerythritol pentavinyl ether, dipentaerythritol hexavinyl ether, ethylene oxide adduct trimethylol propane trivinyl ether, ethylene oxide adduct ditrimethylol propane tetravinyl ether, ethylene oxide adduct pentaerythritol tetravinyl ether, and ethylene oxide adduct dipentaerythritol hexavinyl ether;
vinyl ether group-containing (meth)acrylic acid esters such as 2-vinyloxyethyl (meth)acrylate, 3-vinyloxypropyl (meth)acrylate, 1-methyl-2-vinyloxyethyl (meth)acrylate, 2-vinyloxypropyl (meth)acrylate, 4-vinyloxybutyl (meth)acrylate, 4-vinyloxycyclohexyl (meth)acrylate, 5-vinyloxypentyl (meth)acrylate, 6-vinyloxyhexyl (meth)acrylate, 4-vinyloxymethylcyclohexylmethyl (meth)acrylate, p-vinyloxymethylphenylmethyl (meth)acrylate, 2-(vinyloxyethoxy)ethyl (meth)acrylate, and 2-(vinyloxyethoxyethoxyethoxy)ethyl (meth)acrylate;
polyfunctional allyl compounds such as ethylene glycol diallyl ether, diethylene glycol diallyl ether, polyethylene glycol diallyl ether, propylene glycol diallyl ether, butylene glycol diallyl ether, hexanediol diallyl ether, bisphenol A alkylene oxide diallyl ether, bisphenol F alkylene oxide diallyl ether, trimethylol propane triallyl ether, ditrimethylol propane tetraallyl ether, diallyl phthalate, glycerin triallyl ether, pentaerythritol tetraallyl ether, dipentaerythritol pentaallyl ether, dipentaerythritol hexaallyl ether, ethylene oxide adduct trimethylol propane triallyl ether, ethylene oxide adduct ditrimethylol propane tetraallyl ether, ethylene oxide adduct pentaerythritol tetraallyl ether, ethylene oxide adduct dipentaerythritol hexaallyl ether, triallyl isocyanurate, triallyl cyanurate, triallyl formal, triallyl trimellitate, and tetraallylterephthalamide;
allyl group-containing (meth)acrylate esters such as allyl (meth)acrylate;
polyfunctional (meth)acrylamide compounds such as N,N-ethylene bis(meth)acrylamide;
polyfunctional propargyl compounds such as dipropargyl terephthalate;
polyfunctional maleimide compound such as N,N'-m-phenylene bismaleimide;
polyfunctional urethane (meth) acrylates obtained by a reaction of a polyfunctional isocyanate such as tolylene diisocyanate, isophorone diisocyanate, and xylylene diisocyanate with hydroxyl group-containing (meth)acrylate ester such as 2-hydroxyethyl (meth)acrylate and 2-hydroxypropyl (meth)acrylate; and
polyfunctional aromatic vinyls such as divinylbenzene.

Among them, a polyfunctional (meth)acrylate compound, a polyfunctional allyl compound, and a polyfunctional (meth)acrylamide compound are preferable, a trifunctional or higher polyfunctional (meth)acrylate compound and a trifunctional or higher polyfunctional allyl compound are more preferable, and triallyl isocyanurate, trimethylol propane tri(meth)acrylate are particularly preferable, from the viewpoint that, for example, a paste having excellent reactivity and excellent heat resistance can be easily obtained.

Examples of the polysiloxane containing two or more groups having an ethylenically unsaturated bond in one molecule include dimethylpolysiloxane capped at both molecular chain ends with dimethylvinylsiloxy groups, dimethylpolysiloxane capped at both molecular chain ends with methylphenylvinylsiloxy groups, dimethylsiloxanemethylphenylsiloxane copolymers capped at both molecular chain ends with dimethylvinylsiloxy groups, dimethylsiloxane-methylvinylsiloxane copolymers capped at both molecular chain ends with dimethylvinylsiloxy groups, dimethylsiloxane-methylvinylsiloxane copolymers capped at both molecular chain ends with silanol groups, dimethylsiloxane-methylvinylsiloxane-methylphenylsiloxane copolymers capped at both molecular chain ends with silanol groups, dimethylsiloxane-methylvinylsiloxane copolymers capped at both molecular chain ends with trimethylsiloxy groups, methyl(3,3,3-trifluoropropyl)polysiloxane capped at both molecular chain ends with dimethylvinylsiloxy groups, and organosiloxane copolymers composed of a siloxane unit represented by Formula: (CH₃)₃SiO_{1/2}, a siloxane unit represented by Formula: (CH₃)₂(CH₂=CH)SiO_{1/2}, a siloxane unit represented by Formula: CH₃SiO_{3/2}, and a siloxane unit represented by Formula: (CH₃)₂SiO_{2/2}.

Specific examples of the polysiloxane containing two or more groups having an ethylenically unsaturated bond in one molecule include a compound represented by the following Formula (3). 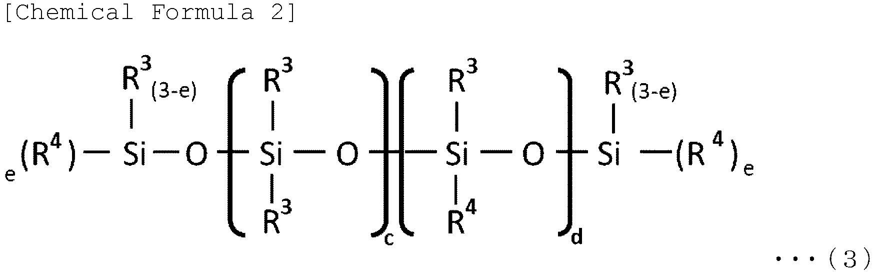 [In Formula (3), R³ is each independently an unsubstituted or substituted monovalent hydrocarbon group, R⁴ is each independently an alkyl group, an alkoxyalkyl group, an alkenyl group, or an acyl group, the sum of c and d is an integer of 2 to 1000, and e is an integer of 1 to 3, provided that, at least two of R³ and R⁴ in Formula (3) include the group having an ethylenically unsaturated bond, a plurality of R³'s present in Formula (3) may be the same as or different from each other, and a plurality of R⁴'s present in Formula (3) may be the same as or different from each other.]

R³ is each independently an unsubstituted or substituted monovalent hydrocarbon group having preferably 1 to 10 carbon atoms, and examples thereof include groups which are the same as the groups exemplified for the organic group bonded to the silicon atom, and an alkenyl group. Among them, a monovalent hydrocarbon group having 1 to 6 carbon atoms is preferable, and an alkenyl group, an aryl group, and an alkyl group having 1 to 3 carbon atoms are more preferable.

Examples of the alkyl group in R⁴ include a linear alkyl group, a branched alkyl group, and a cyclic alkyl group which are the same as the groups exemplified for the organic group bonded to the silicon atom.

Examples of the alkoxyalkyl group in R⁴ include groups having 2 to 10 carbon atoms such as a methoxyethyl group and a methoxypropyl group.

Examples of the alkenyl group in R³ and R⁴ include the same alkenyl group as the group exemplified for the group having an ethylenically unsaturated bond.

Examples of the acyl group in R⁴ include groups having 2 to 10 carbon atoms such as an acetyl group and an octanoyl group.

The sum of c and d is preferably an integer of 10 to 50, and e is preferably 1.

A functional group (ethylenically unsaturated bond) equivalent of the component (B) is preferably 4 g/mol or more, more preferably 50 g/mol or more, and still more preferably 75 g/mol or more, and is preferably 25000 g/mol or less and more preferably 130 g/mol or less, from the viewpoint that, for example, a paste which has a viscosity enough to suppress pump-out after being heat thickened but does not solidify even after being heat thickened and continuously remains in a paste form can be easily obtained.

The component (B) is preferably used so that a functional group ratio represented by the following Formula (1) is preferably 3 or less, more preferably 2 or less, still more preferably 1 or less, and particularly preferably 0.45 or less, and is more preferably 0.01 or more, still more preferably 0.015 or more, and particularly preferably 0.02 or more, from the viewpoint that, for example, a paste which has a viscosity enough to suppress pump-out after being heat thickened but does not solidify even after being heat thickened and continuously remains in a paste form can be easily obtained. Functional group ratio = (Blending amount of the component (A)/Functional group equivalent of the component (A))/(Blending amount of the component (B)/Functional group equivalent of the component (B))

As the component (A), for example, when the component (A) having a functional group equivalent "a" g/mol is used in a blending amount of "x1" mass%, and the component (A) having a functional group equivalent "b" g/mol is used in a blending amount of "x2" mass%, the numerator of the above Formula (1) is "(x1/a + x2/b)". The same applies to the case of using two or more kinds as the components (A) and (B).

A content of the component (B) with respect to 100 mass% of the present paste is preferably an amount that satisfies the above Formula (1), but since the content of the component (B) in the present paste is preferably as small as possible, from this point and the viewpoint that, for example, a paste which has a viscosity enough to suppress pump-out after being heat thickened but does not solidify even after being heat thickened and continuously remains in a paste form can be easily obtained, the content thereof is preferably 0.2 mass% or more, more preferably 0.3 mass% or more, and still more preferably 0.5 mass% or more, and is preferably 50 mass% or less, more preferably 15 mass% or less, and still more preferably 5.5 mass% or less.

### <Radical Initiator (C)>

The component (C) is not particularly limited as long as it is a radical initiator, and a conventionally known radical initiator can be used.

By reacting (crosslinking) the components (A) and (B) using the component (C), a paste in which pump-out is suppressed can be obtained without using a platinum catalyst used in a conventional paste, and for example, a paste having almost no (extremely long) pot life in a storage environment at normal temperature can be easily obtained.

The component (C) used in the present paste may be one kind or two or more kinds.

Examples of the component (C) include peroxides such as 2,5-dimethyl-2,5-di(t-butylperoxy)hexane, dicumyl peroxide, 2,4-dichlorobenzoyl peroxide, di-t-butyl peroxide, t-butyl dicumyl peroxide, t-butylperoxy-2-ethylhexanoate, benzoyl peroxide, 2,5-dimethyl-2,5-(t-butylperoxy)hexyne-3, 2,5-dimethyl-2,5-di(benzoylperoxy)hexane, α,α'-bis(t-butylperoxy-m-isopropyl)benzene, t-butyl peroxyisopropyl carbonate, di-(4-t-butylcyclohexyl)peroxydicarbonate, p-chlorobenzoyl peroxide, t-butylperoxy-2-ethylhexanoate, and t-butyl perbenzoate, and azo compounds such as 2,2'-azobis(2-methylpropionitrile), 2,2'-azobisisobutyronitrile, 2,2'-azobis(2-methylbutyronitrile), 2,2'-azobisisovaleronitrile, 2,2'-azobis(2,4-dimethylvaleronitrile), 4,4'-azobis(4-cyanovaleric acid), 1,1'-azobis(cyclohexanecarbonitrile), 2,2'-azobis(2-methylpropane), 2,2'-azobis(dimethyl isobutyrate), and 2,2'-azobis(2-methylpropionamidine)dihydrochloride.

A content of the component (C) in the present paste is preferably 0.05 parts by mass or more, more preferably 0.5 parts by mass or more, and particularly preferably 1 part by mass or more, and is preferably 30 parts by mass or less, more preferably 20 parts by mass or less, and particularly preferably 10 parts by mass or less, with respect to 100 parts by mass of the total of the components (A) and (B) in the present paste, from the viewpoint that, for example, a paste which has a viscosity enough to suppress pump-out after being heat thickened but does not solidify even after being heat thickened and continuously remains in a paste form can be easily obtained.

Since the content of the component (C) with respect to 100 mass% of the present paste is preferably as small as possible, from this point and the viewpoint that, for example, a paste which has a viscosity enough to suppress pump-out after being heat thickened but does not solidify even after being heat thickened and continuously remains in a paste form can be easily obtained, the content of the component (C) in 100 mass% of the present paste is preferably 0.4 mass% or more, more preferably 0.5 mass% or more, and still more preferably 1 mass% or more, and is preferably 15 mass% or less, more preferably 9 mass% or less, and still more preferably 7.5 mass% or less.

### <Thermally Conductive Filler (D)>

In the case of using the present paste as a heat dissipation paste, the present paste preferably contains a component (D).

In the case of using the component (D) in the present paste, the component (D) to be used may be one kind or two or more kinds. In the case of using two or more kinds of components (D), two or more kinds of components (D) having different materials may be used, or two or more kinds of components (D), for example, having different shapes or average particle sizes may be used.

As the component (D), a filler having a heat conductivity of 1 W/m·K or more is preferably used.

Examples of such a component (D) include metal powder, metal oxide powder, metal nitride powder, metal hydroxide powder, metal oxynitride powder, metal carbide powder, and carbon materials, and specific examples thereof include aluminum oxide (Al₂0₃), silicon oxide (SiO₂), magnesium oxide (MgO), beryllium oxide (BeO), zinc oxide (ZnO), silicon nitride (Si₃N₄), boron nitride (for example: hexagonal BN or cubic BN), aluminum nitride (AlN), silicon carbide (SiC), graphite, diamond, and carbon nanotubes.

The shape of the component (D) is not particularly limited, and examples thereof include a granular shape, a scaly shape, and a needle shape, but is preferably a granular shape because the component (D) can be filled at a higher density.

The average particle size of the component (D) having a granular shape is, for example, 0.1 um or more, preferably 0.5 um or more, and is, for example, 100 µm or less, preferably 50 µm or less. The average particle size is a value of d50 in a particle size distribution obtained by a laser diffraction/scattering method (Microtrac method).

When the present paste contains the component (D), the content of the component (D) is preferably 30 vol% or more and more preferably 50 vol% or more, and is preferably 80 vol% or less and more preferably 70 vol% or less, with respect to 100 vol% of the present paste, from the viewpoint that, for example, a paste having a low initial viscosity and more excellent heat dissipation properties can be easily obtained.

As the blending amount of the component (D) is larger, for example, in the case of using the paste as a heat radiating material, since thermal characteristics tend to be excellent (for example, an increase in thermal diffusion value and a decrease in heat resistance value), a larger amount of the component (D) is desired to be blended depending on the use application. However, in the conventional paste, when the blending amount of the component (D) is increased, since the initial viscosity is increased, and workability is deteriorated (it is difficult to form the paste at a predetermined location due to coating, pouring, for example), in the conventional paste, the component (D) cannot be blended in a large amount.

On the other hand, since the present paste has a low initial viscosity, according to the present paste, even when the blending amount of the component (D) is increased, workability hardly deteriorates.

Therefore, according to one embodiment of the present invention, even when the component (D) is blended in an amount of preferably 40 vol% or more and more preferably 50 vol% or more and in an amount of preferably 80 vol% or less and more preferably 70 vol% or less, with respect to 100 vol% of the present paste for the purpose of obtaining a paste particularly excellent in thermal characteristics, a paste having a low initial viscosity and excellent workability can be obtained.

### <Other Components>

The present paste may contain, as necessary, components other than the components (A) to (D), such as plasticizers such as fluorine or silicone oil; silane coupling agents; surfactants; cross-linking accelerators; solvents; dispersants; anti-aging agents; antioxidants; flame retardants; and pigments, as long as the effects of the present invention are not impaired.

Each of the other components used may be one kind or two or more kinds.

It is preferable that the present paste does not contain a platinum catalyst from the viewpoint, for example, that a paste having almost no (extremely long) pot life can be obtained, for example, in a storage environment at normal temperature.

The conventional paste uses a platinum catalyst, but a platinum catalyst is used, a pot life is short, and the paste cannot be stored for a long period of time.

The phrase "does not contain a platinum catalyst" means that the content of the platinum catalyst with respect to 100 parts by mass of the total of the components (A) and (B) is, for example, 0.0001 parts by mass or less, and the lower limit is preferably 0 parts by mass.

### <Method for Preparing Present Paste>

The present paste can be prepared by mixing the components (A) to (C), and the component (D) and/or the other components used as necessary, and kneading and dispersing the mixture using a mixer, a roll, for example.

### <Physical Properties of Present Paste>

An initial shear viscosity (this viscosity corresponds to an initial viscosity) at 23°C of the present paste measured with a cone-plate type viscometer is preferably low, and specifically, is preferably 500 Pa·s or less, more preferably 300 Pa·s or less, particularly preferably 250 Pa·s or less, and is preferably 1 Pa·s or more.

When the initial viscosity of the present paste is in the above range, a paste having excellent workability (easily forming a paste at a predetermined location by coating, pouring, for example) can be easily obtained. When such a paste having a low initial viscosity is a heat dissipation paste, for example, since a paste layer having a small thickness can be easily formed at a predetermined location such as between a heating element and a heat radiating part and easily conforms to the mating surface of a heating element or a heat radiating part, for example, heat resistance resulting from the paste layer can be reduced, and, for example, an electronic component having excellent heat dissipation characteristics can be easily obtained.

Usually, a paste having a low initial viscosity tends to pump out even when being heat thickened, but according to the present paste, pump-out can be suppressed after heat thickening even when the initial viscosity is low.

A ratio (viscosity after heating/initial viscosity) of a shear viscosity after heating (hereinafter, also referred to as "viscosity after heating") measured with a cone-plate type viscometer when the present paste is heated at a 1-minute half-life temperature of the component (C) for 10 minutes and then cooled to 23°C to the initial viscosity is preferably 3 times or more, more preferably 4 times or more, and still more preferably 5 times or more.

When the ratio of the viscosity after heating to the initial viscosity is in the above range, a paste having an excellent balance between a low initial viscosity and the suppression property of pump-out can be easily obtained.

The viscosity after heating is preferably such a viscosity that the ratio of the viscosity after heating to the initial viscosity falls within the above range, but is preferably 40 Pa·s or more and more preferably 50 Pa·s or more from the viewpoint that, for example, the pump-out can be suppressed, and in the case of using the present paste in use applications in which suppression of pump-out is extremely important, specific numerical value of the viscosity after heating is, for example, preferably 500 Pa·s or more, more preferably 1000 Pa·s or more, and particularly preferably 1500 Pa·s or more.

When the viscosity after heating is in the above range, pump-out can be easily suppressed after heat thickening due to flow resistance.

### <Use Application of Present Paste>

The present paste can be used without limitations in use applications in which the conventional paste has been used; however, from the viewpoint that, for example, the effects of the present invention are more exhibited, the paste can be suitably used in use applications in which there is a possibility of exposure to high temperatures (for example: 200°C or higher), use applications in which the paste is required to remain in a paste form at a predetermined location even when exposed to heat (even when heated), and particularly, in use applications which require the paste to have a low viscosity when the paste is formed at a predetermined location by coating, pouring, for example, and which require the paste to remain in a paste form at a predetermined location when exposed to heat (even when heated).

Specific examples of the use applications include those for members such as sliding members, brake members, and vibration suppression/absorption members, for example. Examples of use applications of the present paste containing the component (D) include those for a heat dissipation paste used, for example, between a heating element and a heat radiating part in an electronic component, for example. Examples of the use applications in which suppression of pump-out is extremely important include those for the heat dissipation paste.

In particular, the present paste containing the component (D) is a paste having a low initial viscosity and, after heating, suppressed in pump-out, base oil bleeding out, solidification and dripping, for example, and since heat dissipation properties (thermal conductivity) can be maintained over a long period, the paste can be suitably used in devices, equipment, components, for example, having a heating element and by using the present paste therein, devices, equipment, components, for example, having excellent long-term reliability can be obtained. In particular, since the paste has a low initial viscosity and conforms well with a heating element and a heat radiating part, a thin paste layer can be formed between the heating element and the heat radiating part, and since heat resistance due to the paste layer can be reduced, the paste is suitably used as a heat dissipation paste provided between the heating element and the heat radiating part. Moreover, since the paste does not solidify, is hard to crack, and can absorb (suppress) vibrations, the paste is suitably used as a heat dissipation paste for semiconductor devices such as power modules and as a heat dissipation paste for vehicles such as automobiles and particularly suitably used as a heat dissipation paste for power modules.

Examples of the method for forming the present paste at a predetermined location include a method in which the present paste is applied to a predetermined location by a conventionally known coating method, and a method in which the present paste is poured into a predetermined location. When the present paste is to be formed between two members, the present paste may be applied or poured between the members and then pressure may be applied while the following heating is performed as necessary. For example, when the present paste is to be formed between a heating element and a heat radiating part, in consideration of heat resistance, the thickness of the present paste (layer) is preferably thin. Therefore, in this case, it is preferable to form the present paste between the heating element and the heat radiating part and then apply pressure thereto to stretch the present paste.

By heating (heat thickening) the present paste formed at a predetermined location as described above, the paste can be made to not migrate from the predetermined location where the paste has been formed.

The heating temperature at this time may be appropriately set according to each component used for the preparation of the present paste, and particularly may be appropriately set according to the type of the component (C) to be used, but is preferably 80°C or higher and more preferably 100°C or higher, and is preferably 200°C or lower and more preferably 170°C or lower.

### Examples

Hereinafter, one embodiment of the present invention will be described in more detail with reference to Examples, but the present invention is not limited to these Examples.

### [Examples 1 to 21 and Comparative Examples 1 to 6]

Pastes were prepared by mixing each of the components listed in Table 1 or 2 in the blending ratios (the units of the numerical values are in parts by mass) shown in Table 1 or 2.

Each of the components listed in Tables 1 and 2 are as follows.

- Polysiloxane A-1: "KF-2001" manufactured by Shin-Etsu Chemical Co., Ltd. (polysiloxane having a mercapto group, functional group equivalent: 1900 g/mol)
- Polysiloxane A-2: "KF-2004" manufactured by Shin-Etsu Chemical Co., Ltd. (polysiloxane having a mercapto group, functional group equivalent: 30000 g/mol)
- Polysiloxane A-3: "X-22-167C" manufactured by Shin-Etsu Chemical Co., Ltd. (polysiloxane having a mercapto group, functional group equivalent: 2300 g/mol)
- Polysiloxane A': "KF-96-100CS" manufactured by Shin-Etsu Chemical Co., Ltd. (dimethylpolysiloxane)
- Compound B-1: "DMS-V25" manufactured by Gelest Inc. (polysiloxane containing two groups having an ethylenically unsaturated bond in one molecule, functional group equivalent: 8600 g/mol)
- Compound B-2: "DMS-V35" manufactured by Gelest Inc. (polysiloxane containing two groups having an ethylenically unsaturated bond in one molecule, functional group equivalent: 24750 g/mol)
- Compound B-3: "KE-1950-10A" manufactured by Shin-Etsu Chemical Co., Ltd. (polysiloxane containing two groups having an ethylenically unsaturated bond in one molecule, functional group equivalent: 55350 g/mol)
- Compound B-4: "Hi-Cross M" manufactured by Seiko Chemical Co., Ltd. (trimethylol propane trimethacrylate, functional group equivalent: 112 g/mol)
- Compound B-5: "TAIC" manufactured by Mitsubishi Chemical Corporation (triallyl isocyanurate, functional group equivalent: 83 g/mol)
- Compound B-6: "Poly(ethylene glycol divinyl ether)" manufactured by Sigma-Aldrich (functional group equivalent: 125 g/mol)
- HEMA: 2-Hydroxyethyl methacrylate
- Initiator C-1: "PERCURE O" manufactured by NOF CORPORATION
- Initiator C-2: 2,2'-Azobis(2-methylbutyronitrile)
- Initiator C-3: 2,2'-Azobis(dimethyl isobutyrate)
- Initiator C-4: "PERHEXA 25B" manufactured by NOF CORPORATION
- Filler D-1: "Advanced Alumina AA-1.5" manufactured by SUMITOMO CHEMICAL COMPANY, LIMITED (alumina powder)

### <Initial Viscosity>

The viscosity (initial viscosity) at 23°C of the prepared paste was measured using a cone-plate type viscometer (manufactured by Brookfield). The results are shown in Tables 1 and 2.

In Examples 1 to 10, Comparative Examples 1 to 3, and Comparative Example 5, the viscosity was measured at a rotational speed of 200 rpm, in Comparative Example 4, the viscosity was measured at a rotational speed of 100 rpm, and in Examples 11 to 21 and Comparative Example 6, the viscosity was measured at a rotational speed of 1.5 rpm.

### <Viscosity after Heating>

The viscosity (viscosity after heating) when the prepared paste was heated at a 1-minute half-life temperature of the radical initiator (C) used in each paste for 10 minutes and then cooled to 23°C was measured using a cone-plate type viscometer (manufactured by Brookfield). The results are shown in Tables 1 and 2.

In Examples 1 and 2 and Comparative Example 2, the viscosity was measured at a rotational speed of 200 rpm, in Example 8, the viscosity was measured at a rotational speed of 100 rpm, in Examples 4 to 7 and Example 9, the viscosity was measured at a rotational speed of 10 rpm, in Example 10, Comparative Example 1, and Comparative Examples 3 to 5, the viscosity was measured at a rotational speed of 1.5 rpm, in Example 3, the viscosity was measured at a rotational speed of 0.5 rpm, and in Examples 11 to 21 and Comparative Example 6, the viscosity was measured at a rotational speed of 0.1 rpm.

The ratio (viscosity after heating/initial viscosity) of the shear viscosity after heating to the initial viscosity measured above is shown in Tables 1 and 2.

### <Paste-Like Properties>

The prepared paste was heat cured at a 1-minute half-life temperature of the radical initiator (C) used in each paste for 10 minutes. Subsequently, the paste after the heat curing was cooled to 23°C to obtain a sample. 0.2 g of the obtained sample was formed into a 5 mm square, and then the thickness of the sample when compressed at 23°C and a pressure of 1.0 MPa was measured on the basis of the following method. The results are shown in Tables 1 and 2.

The sample was compressed by applying a load of 1.0 MPa to the sample by stretching 0.2 g of the sample into a 5 mm square on a metal disk having a screw portion, then sandwiching the sample by another metal disk, and tightening screw in the screw portion with a torque wrench.

The thickness was measured as follows.

Two metal disks were stacked in advance, and the lengths (lengths without the sample) of both ends of the two metal disks in a state where a load of 1 MPa was applied 3 minutes after the load of 1 MPa was applied by tightening screws were measured.

Next, 0.2 g of a sample was stretched into a 5 mm square on the metal disk, then sandwiched by another metal disk, and screwed to apply a load of 1.0 MPa to the sample. Thereafter, in order to eliminate clogging of the screw portion, the screw was loosened to remove the sample from the metal disk. Since 0.2 g of the sample was stretched into a 5 mm square on the metal disk, the process until the sample was removed from the metal disk was defined as one cycle. The lengths (lengths with the sample) of both ends of the two metal disks in a state where a load of 1 MPa was applied 3 minutes after the load of 1 MPa was applied in the fifth cycle after the one cycle was performed five times, were measured.

The thickness of the sample was calculated by subtracting the length without the sample from the length with the sample, and the paste-like properties were evaluated by the thickness of the sample.

The reason why the thickness in the fifth cycle is measured as described above is to prevent a part of the flowable sample to be discharged from being retained (clogged) in the screw portion due to the characteristics of a measurement jig, and to prevent a state where an appropriate thickness cannot be measured.

Pressure sample holder (Flash analyzer LFA467 accessory manufactured by NETZSCH Japan K.K.) and a torque wrench were used at the time of applying the pressure, and Light Magnetic VL-50 (manufactured by Mitutoyo Corporation) was used for the measurement of the thickness. As the metal disk, a metal disk made of SUS304 and having a diameter of 14 mm, a thickness of 3 mm, and a surface roughness Ra of 0.2 was used.

**[Table 1]**

| | Example | | | | | | | | | | Comparative Example | | | | |
|---|---|---|---|---|---|---|---|---|---|---|---|---|---|---|---|
| | 1 | 2 | 3 | 4 | 5 | 6 | 7 | 8 | 9 | 10 | 1 | 2 | 3 | 4 | 5 |
| Polysiloxane A-1 | | | 6.0 | | 1.0 | | | 1.0 | 1.0 | | 2.0 | | | | |
| Polysiloxane A-2 | 2.0 | 2.0 | | 6.0 | 3.0 | 1.2 | 1.2 | 17.1 | 6.0 | 2.0 | | 2.0 | | | |
| Polysiloxane A-3 | | | | | | | | | 1.0 | | | | | | |
| Compound B-1 | 0.8 | | | | | | | | | | | | 2.4 | | |
| Compound B-2 | | 0.8 | | | | | | | | | | | | | |
| Compound B-3 | | | | | | | | | | | | | | 2.4 | |
| Compound B-4 | | | 0.3 | 0.3 | | | | | | | | | | | |
| Compound B-5 | | | | | 0.7 | 0.2 | 0.4 | 0.9 | 0.9 | | | | | | 2.4 |
| Compound B-6 | | | | | | | | | | 0.8 | | | | | |
| HEMA | | | | | | | | | | | 0.4 | 0.8 | | | |
| Initiator C-1 | | | 0.3 | 0.6 | | | | 1.5 | | | | | | | |
| Initiator C-2 | | | | | 0.8 | | | | | | | | | | |
| Initiator C-3 | | | | | | | | | 0.3 | | | | | | |
| Initiator C-4 | 0.2 | 0.2 | | | | 0.2 | 0.2 | | | 0.2 | 0.2 | 0.2 | 0.6 | 0.6 | 0.6 |
| Initial viscosity (Pa·s) | 0.15 | 0.37 | 0.16 | 0.21 | 0.47 | 0.17 | 0.18 | 0.03 | 0.13 | 0.02 | 0.05 | 0.08 | 0.23 | 5.15 | 0.04 |
| Viscosity after heating (Pa·s) | 0.46 | 2.08 | 317.5 | 3.89 | 7.78 | 3.97 | 4.13 | 0.65 | 9.05 | 32.28 | 86.26 | 0.17 | 7.94 | 1873 | 92.47 |
| Viscosity after heating/initial viscosity | 3.1 | 5.6 | 1984.4 | 18.5 | 16.6 | 23.4 | 22.9 | 21.7 | 69.6 | 1614.0 | 1725.2 | 2.1 | 34.5 | 363.7 | 2311.8 |
| Paste-like properties (µm) | 4 | 5 | 152 | 41 | 144 | 156 | 113 | 11 | 186 | 175 | 348 | 3 | 411 | 661 | 2069 |

**[Table 2]**

| | Example | | | | | | | | | | | Comparative Example |
|---|---|---|---|---|---|---|---|---|---|---|---|---|
| | 11 | 12 | 13 | 14 | 15 | 16 | 17 | 18 | 19 | 20 | 21 | 6 |
| Polysiloxane A-1 | 1.1 | 2.5 | 2.5 | | 2.7 | 25.7 | 25.7 | 1.2 | 1.2 | 1.2 | 1.2 | |
| Polysiloxane A-2 | 17.9 | 23.0 | 22.5 | 25.7 | 23.0 | | | 24.5 | 25.7 | 24.5 | 21.4 | |
| Polysiloxane A' | | | | | | | | | | | | 4.1 |
| Compound B-3 | | | | | | | | | | | | 0.9 |
| Compound B-5 | 1.0 | 1.75 | 1.0 | 0.5 | 1.0 | 1.0 | 0.5 | 1.0 | 1.0 | 1.0 | 1.0 | 0.06 |
| Initiator C-1 | 1.6 | | | | | | | | | | | |
| Initiator C-3 | | 0.8 | 0.8 | 2.0 | 2.0 | 2.0 | 2.0 | 2.0 | 1.0 | 1.0 | 2.0 | |
| Initiator C-4 | | | | | | | | | | | | 0.25 |
| Filler D-1 | 55.5 | 72.0 | 72.0 | 142.0 | 116.0 | 116.0 | 116.0 | 142.0 | 143.0 | 133.0 | 142.0 | 17.5 |
| Initial viscosity (Pa·s) | 25.4 | 23.3 | 22.2 | 78.3 | 60.3 | 21.7 | 27.5 | 76.2 | 57.2 | 100.5 | 113.8 | 292.0 |
| Viscosity after heating (Pa·s) | 1588 | 1984 | 1786 | 246 | 2096 | 4207 | 3270 | 2619 | 2667 | 4516 | 3342 | 5128 |
| Viscosity after heating/initial viscosity | 62.5 | 85.2 | 80.3 | 3.1 | 34.7 | 193.9 | 118.8 | 34.4 | 46.7 | 44.9 | 29.4 | 17.6 |
| Paste-like properties (µm) | 131 | 135 | 112 | 9 | 45 | 159 | 168 | 46 | 15 | 82 | 165 | 238 |

The pastes obtained in Examples 1 to 21 were pastes which does not solidify even after being heat thickened, and were pastes in which pump-out can be suppressed even when heat thickening is performed at a relatively low heating temperature despite a low initial viscosity.

On the other hand, the paste obtained in Comparative Example 2, pump-out could not be suppressed even after heat thickening, and the pastes obtained in Comparative Examples 1 and 3 to 6 could not be said to be a paste after heat curing (there was no fluidity).

Since the present paste contains the components (A) to (C), the above effects are exhibited. As an example of the reason for achieving such effects, the following is considered.

In the present paste, in particular, by using the component (A), it is considered that the component (A) reacts during heat curing (heat thickening) to play a role of promoting crosslinking while acting as an appropriate plasticizer, and it is difficult to bleed out, so that the viscosity can be increased while maintaining a paste state.

On the other hand, as in Comparative Examples 3 to 6, in the case of using a polysiloxane containing a group having an ethylenically unsaturated bond or a general silicon oil without using the component (A), it is considered that appropriate thickening cannot be performed (thickening does not proceed), or the silicon oil bleeds out, so that the paste-like properties cannot be maintained after heat curing.

## Claims

1. A paste comprising: a polysiloxane (A) having a mercapto group; a compound (B) comprising two or more groups having an ethylenically unsaturated bond in one molecule; and a radical initiator (C).

2. The paste according to claim 1, wherein a functional group ratio represented by the following Formula (1) is 3 or less: Functional group ratio = (a blending amount of the polysiloxane (A)/a functional group equivalent of the polysiloxane (A))/(a blending amount of the compound (B)/a functional group equivalent of the compound (B))

3. The paste according to claim 1, which satisfies the following requirement (I):
Requirement (I); A thickness is 200 µm or less when heat curing is performed at a 1-minute half-life temperature of the radical initiator (C) for 10 minutes to form 0.2 g of the paste after the heat curing into a 5 mm square, and then the paste is compressed at 23°C and a pressure of 1.0 MPa.

4. The paste according to any one of claims 1 to 3, wherein an initial shear viscosity at 23°C is 500 Pa·s or less.

5. The paste according to any one of claims 1 to 3, wherein a ratio of a shear viscosity after heating of the paste after the paste is heated at a 1-minute half-life temperature of the radical initiator (C) for 10 minutes and then cooled to 23°C to the initial shear viscosity at 23°C is 3 times or more.

6. The paste according to any one of claims 1 to 3, comprising a thermally conductive filler (D).

7. The paste according to claim 6, wherein a content of the thermally conductive filler (D) is 30 to 80 vol% with respect to 100 vol% of the paste.
